# EUROPEAN PATENT SPECIFICATION

(11) **EP 3 461 065 B1**
(45) Date of publication and mention of the grant of the patent: **29.07.2020**
(21) Application number: 18183960.6
(22) Date of filing: 21.04.2015
(51) Int. Cl.: H04L 12/24, H04W 24/04, G06F 11/16, G06F 11/20, G06F 11/07

(54) **CLUSTER ARBITRATION METHOD AND MULTI-CLUSTER COOPERATION SYSTEM**
CLUSTER-ARBITRIERUNGSVERFAHREN UND MULTI-CLUSTER-KOORDINIERUNGSSYSTEM
PROCÉDÉ D'ARBITRAGE DE GRAPPE ET SYSTÈME DE COORDINATION DE GRAPPES MULTIPLES

(30) Priority: 27.11.2014 CN 201410705888
(43) Date of publication of application: 27.03.2019
(62) Divisional of application: 15863647.2
(73) Proprietor: Huawei Technologies Co., Ltd., Shenzhen, Guangdong 518129 (CN)
(72) Inventor: CHEN, Xiaoli, Shenzhen, Guangdong 518129 (CN); ZENG, Jingyong, Shenzhen, Guangdong 518129 (CN)
(74) Representative: Pfenning, Meinig & Partner mbB

(56) References cited:
- US-B1- 6 279 032
- US-B1- 6 393 485
- US-B1- 8 650 281
- US-B2- 7 139 925

## Description

### TECHNICAL FIELD

The present invention relates to the mobile communications field, and in particular, to a cluster arbitration method and a multi-cluster cooperation system.

### BACKGROUND

Active-active data centers mean that both the two data centers are in a running state and can bear services simultaneously, which improves an overall service capability and system resource utilization of the data centers. The two data centers are mutually redundant. When one data center is faulty, services can be automatically switched to the other data center with zero data loss.

The active-active data centers generally include a storage layer, a network layer, and an application layer. There are several clusters deployed in the active-active data centers. One portion of each cluster is located in one data center, and the other portion of the cluster is located in the other data center. All sub-clusters of each data center cooperate with each other.

However, each cluster in the active-active data centers has a different arbitration mechanism. When a fault occurs, each cluster uses its own arbitration mechanism to arbitrate. As a result, arbitration results of the clusters are not always consistent. That is, it may occur that, for some clusters, their sub-clusters located in one data center survive, and for some clusters, their sub-clusters located in the other data center survive. This further results in a probabilistic situation of interruption of entire service access.

US patent application US 6,279,032 B1 discloses a system in a cluster that is a node. Systems (nodes) in the same cluster are separated into two or more distinct member sets, systems in each member set communicate among themselves. No system of a set communicates with a system of any of the other sets. One member set (comprising systems/nodes) of a cluster survives to represent the cluster. A persistent storage device with cluster configuration information therein is provided as a quorum resource. Using an arbitration process, one system exclusively reserves the quorum resource. The member set with the system therein having the exclusive reservation of the quorum device is selected as the cluster.

### SUMMARY

Embodiments of the present invention provide a cluster arbitration method, which can reduce a probability of interruption of service access.

A cluster arbitration method and a first cluster group according to the independent claims are provided. Dependent claims provide preferred embodiments.

A first aspect of the embodiments of the present invention provides a cluster arbitration method, including:
when a fault has occurred in a first cluster group or a second cluster group, determining, by the first cluster group, a preemption representative of the first cluster group, where if the fault has not occurred in the first cluster group, the preemption representative of the first cluster group attempts to preempt an arbitration device, and if the fault has occurred in the first cluster group, the preemption representative of the first cluster group quits to preempt the arbitration device, and where the first cluster group includes one portion of nodes of a first cluster and one portion of nodes of a second cluster, the second cluster group includes another portion of nodes of the first cluster and another portion of nodes of the second cluster, and the first cluster and the second cluster cooperate with each other;
if the preemption representative of the first cluster group successfully preempts the arbitration device, continuing, by the first cluster group, service provision.

With reference to the first aspect of the embodiments of the present invention, in a first implementation of the first aspect of the embodiments of the present invention, if the fault has occurred in the second cluster group, the preemption representative of the second cluster group quits to preempt the arbitration device.

With reference to the first aspect of the embodiments of the present invention or the first implementation of the first aspect of the embodiments of the present invention, in a second implementation of the first aspect of the embodiments of the present invention, whether the preemption representative of the first cluster group successfully preempts the arbitration device is determined by an arbitration mechanism, and the arbitration mechanism is that a preemption representative that is the first to preempt the arbitration device preempts the arbitration device successfully.

With reference to the first aspect of the embodiments of the present invention or any one of the first and the second implementation of the first aspect of the embodiments of the present invention, in a third implementation of the first aspect of the embodiments of the present invention, if the fault has occurred in each of the first cluster group and the second cluster group, the first cluster attempts to preempt the arbitration device by using a first preset mechanism, or the second cluster attempts to preempt the arbitration device by using a second preset mechanism.

With reference to the first aspect of the embodiments of the present invention or the first to the third implementations of the first aspect of the embodiments of the present invention, in a fourth implementation of the first aspect of the embodiments of the present invention, the first cluster group is located in one data center, and the second cluster group is located in the other data center, and two data centers are active-active data centers.

A second aspect of the embodiments of the present invention provides a first cluster group, including:
means for when a fault has occurred in the first cluster group or a second cluster group, determining a preemption representative of the first cluster group, where if the fault has not occurred in the first cluster group, the preemption representative of the first cluster group attempts to preempt an arbitration device, and if the fault has occurred in the first cluster group, the preemption representative of the first cluster group quits to preempt the arbitration device, and where the first cluster group includes one portion of nodes of a first cluster and one portion of nodes of a second cluster, the second cluster group includes another portion of nodes of the first cluster and another portion of nodes of the second cluster, and the first cluster and the second cluster cooperate with each other;
means for if the preemption representative of the first cluster group successfully preempts the arbitration device, continuing service provision.

With reference to the second aspect of the embodiments of the present invention, in a first implementation of the second aspect of the embodiments of the present invention, if the fault has occurred in the second cluster group, the preemption representative of the second cluster group quits to preempt the arbitration device.

With reference to the second aspect of the embodiments of the present invention or the first implementation of the second aspect of the embodiments of the present invention, in a second implementation of the second aspect of the embodiments of the present invention, whether the preemption representative of the first cluster group successfully preempts the arbitration device is determined by an arbitration mechanism, and the arbitration mechanism is that a preemption representative that is the first to preempt the arbitration device preempts the arbitration device successfully.

With reference to the second aspect of the embodiments of the present invention or any one of the first and the second implementation of the second aspect of the embodiments of the present invention, in a third implementation of the second aspect of the embodiments of the present invention, if the fault has occurred in each of the first cluster group and the second cluster group, the first cluster attempts to preempt the arbitration device by using a first preset mechanism, or the second cluster attempts to preempt the arbitration device by using a second preset mechanism.

With reference to the second aspect of the embodiments of the present invention or the first to the third implementations of the second aspect of the embodiments of the present invention, in a fourth implementation of the second aspect of the embodiments of the present invention, the first cluster group is located in one data center, and the second cluster group is located in the other data center, and the two data centers are active-active data centers.

It can be seen from the foregoing solution that the embodiments of the present invention have the following advantages:

In the embodiments of the present invention, when a fault occurs, a first cluster group and a second cluster group determine respective preemption representatives to attempt to preempt an arbitration device in arbitration devices, and all sub-clusters in a cluster group that succeeds in the preemption survive. This ensures a consistent arbitration result for different clusters when a fault occurs, so that a surviving cluster group can continue service provision.

### BRIEF DESCRIPTION OF DRAWINGS

FIG. 1 is a flowchart of a cluster arbitration method according to an embodiment of the present invention; and
FIG. 2 is a schematic structural diagram of a multi-cluster cooperation system according to an embodiment of the present invention.

### DESCRIPTION OF EMBODIMENTS

Embodiments of the present invention provide a cluster arbitration method and a multi-cluster cooperation system, intended to reduce a probability of interruption of service access.

To make persons skilled in the art understand the technical solutions in the present invention better, the following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

In the specification, the claims, and the accompanying drawings of the present invention, the terms "include", "contain" and any other variants mean to cover a non-exclusive inclusion. For example, a process, method, system, product, or device that includes a list of steps or units is not necessarily limited to those steps or units, but may include other steps or units not expressly listed or inherent to such a process, method, system, product, or device.

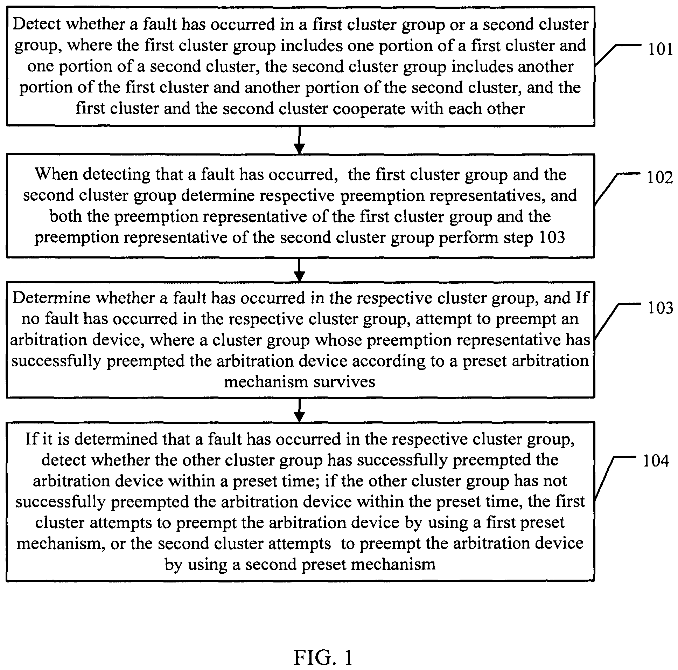

Referring to FIG. 1, a cluster arbitration method according to an embodiment of the present invention includes:
101. Detect whether a fault has occurred in a first cluster group and a second cluster group, where the first cluster group includes one portion of a first cluster and one portion of a second cluster, the second cluster group includes another portion of the first cluster and another portion of the second cluster, and the first cluster and the second cluster cooperate with each other.

In this embodiment, of the first cluster, one portion of nodes are configured in the first cluster group, and another portion of nodes are configured in the second cluster group. These two portions of nodes respectively form two sub-clusters of the first cluster. Of the second cluster, one portion of nodes are configured in the first cluster group, and another portion of nodes are configured in the second cluster group. These two portions of nodes respectively form two sub-clusters of the second cluster. The first cluster and the second cluster cooperate with each other, and the first cluster group and the second cluster group bear services simultaneously and are mutually redundant.

Specifically, for example, the first cluster group and the second cluster group are active-active data centers. One VIS6600T is deployed at a storage layer in each of the two data centers. The two VIS6600Ts form a VIS cluster, providing read and write services for host services of both the two data centers. An Oracle RAC cluster is deployed at an application layer of the two data centers. Of the Oracle RAC cluster, one portion of nodes are configured in one data center, and the other portion of nodes are configured in the other data center.

It should be noted that clusters in the first cluster group and the second cluster group are not limited to the first cluster and the second cluster, and may further include another cluster. For example, the first cluster group and the second cluster group further include a third cluster. Of the third cluster, one portion of nodes are configured in the first cluster group, and another portion of nodes are configured in the second cluster group.

A sub-cluster that is of the first cluster and in the first cluster group and a sub-cluster that is of the second cluster and in the first cluster group communicate with each other. Similarly, a sub-cluster that is of the first cluster and in the second cluster group and a sub-cluster that is of the second cluster and in the second cluster group communicate with each other. Moreover, the sub-cluster that is of the first cluster and in the first cluster group and the sub-cluster that is of the first cluster and in the second cluster group periodically obtain an operating status of each other by using a cluster IP heartbeat link. The sub-cluster that is of the second cluster and in the first cluster group and the sub-cluster that is of the second cluster and in the second cluster group periodically obtain an operating status of each other by using the cluster IP heartbeat link.

When a cluster in one cluster group is faulty, another cluster in this cluster group cannot communicate with the cluster. Then, clusters in this cluster group may determine that a fault has occurred in the cluster group. Accordingly, when an operating status of the faulty cluster cannot be obtained, a cluster that is in another cluster group and that communicates with the faulty cluster may determine that a fault has occurred in the faulty cluster, and send a message that the cluster is faulty to another cluster in the another cluster group.

Alternatively, when the cluster IP heartbeat link is faulty, causing the sub-cluster that is of the first cluster and in the first cluster group and the sub-cluster that is of the first cluster and in the second cluster group unable to obtain an operating status of each other, or causing the sub-cluster that is of the second cluster and in the first cluster group and the sub-cluster that is of the second cluster and in the second cluster group unable to obtain an operating status of each other, it may be further determined that a fault has occurred in the first cluster group or the second cluster group.

102. When detecting that a fault has occurred, the first cluster group and the second cluster group determine respective preemption representatives, and both the preemption representative of the first cluster group and the preemption representative of the second cluster group perform step 103.

When determining that a fault has occurred, the first cluster group and the second cluster group determine their respective preemption representatives according to a preset mechanism. The preemption representative is configured to represent the respective cluster group to attempt to preempt an arbitration device. All clusters in a cluster group whose preemption representative has preempted the arbitration device survive and continue service provision, while all sub-clusters in the other cluster group stop service provision.

There may be multiple mechanisms for determining a preemption representative. For example, it may be preset that a node with a smallest node number is selected as a preemption representative, or that a last started node is used as a preemption representative, and no limitation is imposed herein. Alternatively, the preemption representative may not be one node in a cluster group, but be multiple nodes or one sub-cluster, and no limitation is imposed herein.

A mechanism for determining the preemption representative of the first cluster group may be the same as or different from a mechanism for determining the preemption representative of the second cluster group, and no limitation is imposed herein. After the first cluster group and the second cluster group have determined the respective preemption representatives, both the two preemption representatives perform step 103.

103. Determine whether a fault has occurred in the respective cluster group; and if no fault has occurred in the respective cluster group, attempt to preempt an arbitration device, where a cluster group whose preemption representative has successfully preempted the arbitration device according to a preset arbitration mechanism survives.

All sub-clusters in the cluster group whose preemption representative has successfully preempted the arbitration device survive and continue service provision. Because all sub-clusters in a cluster group cooperate with each other, if a fault occurs in the cluster group, and some sub-clusters cannot provide services, service interruption is also caused. Therefore, before attempting to preempt the arbitration device, both the preemption representatives determine whether a fault has occurred in the respective cluster group.

After determining that no fault has occurred in the respective cluster group, the preemption representative attempts to preempt the arbitration device according to the preset arbitration mechanism. Multiple preset arbitration mechanisms are available, which are prior arts and are not elaborated herein. A cluster group whose preemption representative has successfully preempted the arbitration device continues to survive, and the other cluster group "kills itself' and stops service provision.

If the preemption representative finds that a fault has occurred in the respective cluster group, the preemption representative quits a preemption.

In this embodiment of the present invention, when a fault occurs, a first cluster group and a second cluster group determine respective preemption representatives to attempt to preempt an arbitration device, and all sub-clusters in a cluster group that succeeds in the preemption survive. This ensures a consistent arbitration result for different clusters when a fault occurs, so that a surviving cluster group can continue service provision.

However, there may be a situation that both the two preemption representatives find that a fault has occurred in the respective cluster group and therefore do not participate in the preemption, although such probability is low. Therefore, preferably, in step 102 of the cluster arbitration method of the present invention, both the preemption representative of the first cluster group and the preemption representative of the second cluster group further perform step 104.

104. If it is determined that a fault has occurred in the respective cluster group, detect whether the other cluster group has preempted the arbitration device successfully within a preset time, where, if the other cluster group has not preempted the arbitration device successfully within the preset time, the first cluster attempts to preempt the arbitration device by using a first preset mechanism, or the second cluster attempts to preempt the arbitration device by using a second preset mechanism.

When a preemption representative of a cluster group determines that a fault has occurred in the cluster group, while quitting the preemption, the preemption representative further detects whether a preemption representative of the other cluster group has successfully preempted the arbitration device within the preset time. If the preemption representative of the other cluster group has not successfully preempted the arbitration device within the preset time, it means that a fault has occurred in both the two cluster groups. Therefore, the one portion of the first cluster that is in the first cluster group and the another portion of the first cluster that is in the second cluster group use the first preset mechanism to attempt to preempt the arbitration device; and the one portion of the second cluster that is in the first cluster group and the another portion of the second cluster that is in the second cluster group use the second preset mechanism to attempt to preempt the arbitration device. The first preset mechanism and the second preset mechanism are respectively original arbitration mechanisms of the first cluster and the second cluster. The first preset mechanism and the second preset mechanism may be the same, or may be different.

In this way, even though the first cluster group or the second cluster group is in a situation that not the entire first cluster group or second cluster group can survive, the clusters can still make best efforts to ensure service continuity.

In this embodiment, in a case of a link failure or another failure when sub-clusters in the first cluster group and sub-clusters in the second cluster group can still continue to survive, of the first cluster group and the second cluster group, which cluster group continues service provision and which cluster group "kills itself' and stops service provision depend on which cluster group has a preemption representative successfully preempting the arbitration device.

In practical application, which cluster group survives in precedence in this case may be further preset. For example, it may be preset that the first cluster group survives in precedence. Then, when both the preemption representative of the first cluster group and the preemption representative of the second cluster group attempt to preempt the arbitration device, the preemption representative of the second cluster group makes a concession, to ensure that the preemption representative of the first cluster group can successfully preempt the arbitration device.

Specifically, for example, the preset arbitration mechanism is that a preemption representative that is the first in time to preempt the arbitration device preempts the arbitration device. When the two preemption representatives attempt to preempt the arbitration device, it is preset that, after determining that no fault has occurred in the respective cluster group, the preemption representative of the second cluster group waits for a preset time before attempting to preempt the arbitration device. This can ensure that the preemption representative of the first cluster group is the first to preempt the arbitration device.

For ease of understanding, the following uses a practical application scenario to describe the cluster arbitration method of this embodiment of the present invention.

At a storage layer of active-active data centers, one VIS6600T is deployed in both a data center 1 and a data center 2. The two VIS6600Ts form a VIS cluster. At an application layer of the active-active data centers, an Oracle RAC cluster is provided. Of the Oracle RAC cluster, one portion of nodes are configured in the data center 1, and the other portion of nodes are configured in the data center 2. Virtual machine servers of the two data centers further form a virtual machine cluster, and respective core switches of the two data centers form a core switch cluster. The active-active data centers are further provided with an arbitration device.

A cluster IP heartbeat link and an FC data transmission network are used between the two data centers of the active-active data centers for transfer of control information and configuration information and data synchronization.

The active-active data centers are preset as follows: The VIS cluster, the Oracle RAC cluster, the virtual machine cluster, and the core switch that are in the data center 1 belong to Group 1; and the VIS cluster, the Oracle RAC cluster, the virtual machine cluster, and the core switch that are in the data center 2 belong to Group2.

When the cluster IP heartbeat link is faulty, the data centers 1 and 2 each select a node with a smallest node number from respective nodes as a preemption representative. The preemption representatives of both the data centers 1 and 2 determine whether a fault has occurred in a cluster in the respective data center. If a fault has occurred in a cluster in one data center, and no fault has occurred in any cluster in the other data center, a preemption representative of the data center in which no fault has occurred attempts to preempt the arbitration device and succeeds in the preemption.

If no fault has occurred in any cluster in the two data centers, one of the preemption representatives of the two data centers that is the first to preempt the arbitration device succeeds in the preemption. All clusters in the data center whose preemption representative has succeeded in preemption continue to survive, so that the data center continues service provision, while all clusters in the other data center "kill themselves" and stop service provision.

If the preemption representatives of both the two data centers detect that a fault has occurred in a cluster in the respective data center, both the preemption representatives further detect whether the preemption representative of the other data center has successfully preempted the arbitration device within a preset time. When it is determined that the preemption representative of the other data center has not successfully preempted the arbitration device, the VIS cluster, the Oracle RAC cluster, the virtual machine cluster, and the core switch cluster in each of the two data centers use respective original arbitration mechanisms of the clusters to attempt to preempt the arbitration device.

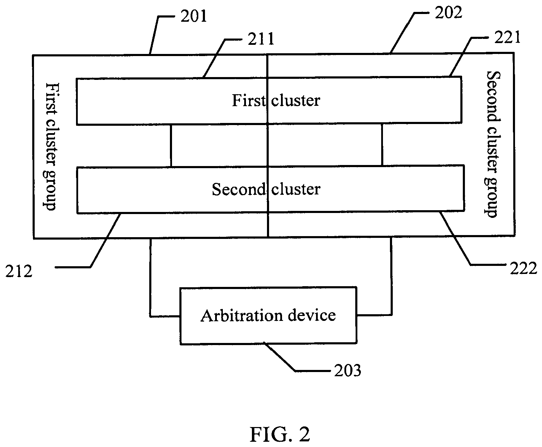

The foregoing describes the cluster arbitration method in the embodiments of the present invention. The following describes a multi-cluster cooperation system in the embodiments of the present invention. Referring to FIG. 2, a multi-cluster cooperation system 200 in an embodiment of the present invention includes:
a first cluster group 201, a second cluster group 202, and an arbitration device 203, where the first cluster group 201 includes one portion 211 of a first cluster and one portion 221 of a second cluster, the second cluster group 202 includes another portion 212 of the first cluster and another portion 222 of the second cluster, the first cluster and the second cluster cooperate with each other, and the arbitration device 203 is provided with a preset arbitration mechanism.

The first cluster group 201 and the second cluster group 202 are configured to determine respective preemption representatives when detecting that a fault has occurred in the first cluster group 201 and the second cluster group 202.

Both the preemption representative of the first cluster group 201 and the preemption representative of the second cluster group 202 are configured to determine whether a fault has occurred in the respective cluster group; and if no fault has occurred in the respective cluster group, attempt to preempt the arbitration device 203, where a cluster group whose preemption representative has successfully preempted the arbitration device according to the preset arbitration mechanism survives.

In this embodiment of the present invention, when a fault occurs, a first cluster group and a second cluster group determine respective preemption representatives to attempt to preempt an arbitration device in arbitration devices, and all sub-clusters in a cluster group that succeeds in the preemption survive. This ensures a consistent arbitration result for different clusters when a fault occurs, so that a surviving cluster group can continue service provision.

Preferably, the arbitration device 203 is further provided with a first preset mechanism and a second preset mechanism.

Both the preemption representative of the first cluster group 201 and the preemption representative of the second cluster group 202 are further configured to: when determining that a fault has occurred in the respective cluster group, detect whether the other cluster group has attempted to preempt the arbitration device within a preset time. If the other cluster group has not attempted to preempt the arbitration device within the preset time, the first cluster attempts to preempt the arbitration device by using the first preset mechanism, or the second cluster 22 attempts to preempt the arbitration device by using the second preset mechanism.

Preferably, the preemption representative of the second cluster group 202 is further configured to make a concession when both the preemption representative of the first cluster group 201 and the preemption representative of the second cluster group 202 attempt to preempt the arbitration device.

Preferably, the preset arbitration mechanism is that a preemption representative that is the first to preempt the arbitration device preempts the arbitration device successfully. The preemption representative of the second cluster group 202 is configured to attempt to preempt the arbitration device a preset time later after determining that no fault has occurred in the respective cluster group.

Preferably, the multi-cluster cooperation system is active-active data centers, where the first cluster group is located in one data center, and the second cluster group is located in the other data center.

For ease of understanding, the following uses a practical application scenario to describe the multi-cluster cooperation system in this embodiment of the present invention.

In this embodiment, the multi-cluster cooperation system is active-active data centers. At a storage layer of the active-active data centers, one VIS6600T is deployed in both a data center 1 and a data center 2. The two VIS6600Ts form a VIS cluster. At an application layer of the active-active data centers, an Oracle RAC cluster is provided. Of the Oracle RAC cluster, one portion of nodes are configured in the data center 1, and the other portion of nodes are configured in the data center 2. Virtual machine servers of the two data centers further form a virtual machine cluster, and respective core switches of the two data centers form a core switch cluster. The active-active data centers are further provided with an arbitration device.

A cluster IP heartbeat link and an FC data transmission network are used between the two data centers of the active-active data centers for transfer of control information and configuration information and data synchronization.

The active-active data centers are preset as follows: The VIS cluster, the Oracle RAC cluster, the virtual machine cluster, and the core switch that are in the data center 1 belong to Group 1; and the VIS cluster, the Oracle RAC cluster, the virtual machine cluster, and the core switch that are in the data center 2 belong to Group2.

When the cluster IP heartbeat link is faulty, the data centers 1 and 2 each select a node with a smallest node number from respective nodes as a preemption representative. The preemption representatives of both the data centers 1 and 2 determine whether a fault has occurred in a cluster in the respective data center. If a fault has occurred in a cluster in one data center, and no fault has occurred in any cluster in the other data center, a preemption representative of the data center in which no fault has occurred attempts to preempt the arbitration device and succeeds in the preemption.

If no fault has occurred in any cluster in the two data centers, one of the preemption representatives of the two data centers that is the first to preempt the arbitration device succeeds in the preemption. All clusters in the data center whose preemption representative has succeeded in preemption continue to survive, so that the data center continues service provision, while all clusters in the other data center "kill themselves" and stop service provision.

If the preemption representatives of both the two data centers detect that a fault has occurred in a cluster in the respective data center, both the preemption representatives further detect whether the preemption representative of the other data center has successfully preempted the arbitration device within a preset time. When it is determined that the preemption representative of the other data center has not successfully preempted the arbitration device, the VIS cluster, the Oracle RAC cluster, the virtual machine cluster, and the core switch cluster in each of the two data centers use respective original arbitration mechanisms of the clusters to attempt to preempt the arbitration device.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

Further embodiments of the present invention are provided in the following. It should be noted that the numbering used in the following section does not necessarily need to comply with the numbering used in the previous sections.

Embodiment 1. A cluster arbitration method, comprising:
detecting whether a fault has occurred in a first cluster group or a second cluster group, wherein the first cluster group comprises one portion of a first cluster and one portion of a second cluster, the second cluster group comprises another portion of the first cluster and another portion of the second cluster, and the first cluster and the second cluster cooperate with each other; and
when detecting that a fault has occurred, determining, by the first cluster group and the second cluster group, respective preemption representatives, wherein both the preemption representative of the first cluster group and the preemption representative of the second cluster group perform the following steps:
   determining whether a fault has occurred in the respective cluster group; and
   if no fault has occurred in the respective cluster group, attempting to preempt an arbitration device, wherein a cluster group whose preemption representative has successfully preempted the arbitration device according to a preset arbitration mechanism survives.

Embodiment 2. The method according to embodiment 1, wherein both the preemption representative of the first cluster group and the preemption representative of the second cluster group further perform the following step:
if determining that a fault has occurred in the respective cluster group, detecting whether the other cluster group has attempted to preempt the arbitration device within a preset time, wherein, if the other cluster group has not attempted to preempt the arbitration device within the preset time, the first cluster attempts to preempt the arbitration device by using a first preset mechanism, or the second cluster attempts to preempt the arbitration device by using a second preset mechanism.

Embodiment 3. The method according to embodiment 1 or 2, after the determining whether a fault has occurred in the respective cluster group, further comprising:
when both the preemption representative of the first cluster group and the preemption representative of the second cluster group determine that no fault has occurred in the respective cluster group, attempting, by both the preemption representative of the first cluster group and the preemption representative of the second cluster group, to preempt the arbitration device, wherein it is preset that the preemption representative of the second cluster group makes a concession.

Embodiment 4. The method according to any one of embodiments 1 to 3, wherein the preset arbitration mechanism is that a preemption representative that is the first to preempt the arbitration device preempts the arbitration device successfully; and
that it is preset that the preemption representative of the second cluster group makes a concession specifically comprises:
presetting that the preemption representative of the second cluster group attempts to preempt the arbitration device a preset time later after determining that no fault has occurred in the respective cluster group.

Embodiment 5. The method according to any one of embodiments 1 to 4, wherein the first cluster group and the second cluster group are located in active-active data centers, wherein the first cluster group is located in one data center, and the second cluster group is located in the other data center.

Embodiment 6. A multi-cluster cooperation system, comprising:
a first cluster group, a second cluster group, and an arbitration device, wherein the first cluster group comprises one portion of a first cluster and one portion of a second cluster, the second cluster group comprises another portion of the first cluster and another portion of the second cluster, the first cluster and the second cluster cooperate with each other, and the arbitration device is provided with a preset arbitration mechanism;
both the first cluster group and the second cluster group are configured to determine respective preemption representatives when detecting that a fault has occurred in the first cluster group and the second cluster group; and
both the preemption representative of the first cluster group and the preemption representative of the second cluster group are configured to determine whether a fault has occurred in the respective cluster group; and if no fault has occurred in the respective cluster group, attempt to preempt the arbitration device, wherein a cluster group whose preemption representative has successfully preempted the arbitration device according to the preset arbitration mechanism survives.

Embodiment 7. The multi-cluster cooperation system according to embodiment 6, wherein:
the arbitration device is further provided with a first preset mechanism and a second preset mechanism; and
both the preemption representative of the first cluster group and the preemption representative of the second cluster group are further configured to: when determining that a fault has occurred in the respective cluster group, detect whether the other cluster group has attempted to preempt the arbitration device within a preset time, wherein, if the other cluster group has not attempted to preempt the arbitration device within the preset time, the first cluster attempts to preempt the arbitration device by using the first preset mechanism, or the second cluster attempts to preempt the arbitration device by using the second preset mechanism.

Embodiment 8. The multi-cluster cooperation system according to embodiment 6 or 7, wherein:
the preemption representative of the second cluster group is further configured to make a concession when both the preemption representative of the first cluster group and the preemption representative of the second cluster group determine that no fault has occurred in the respective cluster group, and when both the preemption representative of the first cluster group and the preemption representative of the second cluster group attempt to preempt the arbitration device.

Embodiment 9. The multi-cluster cooperation system according to any one of embodiments 6 to 8, wherein the preset arbitration mechanism is that a preemption representative that is the first to preempt the arbitration device preempts the arbitration device successfully; and
the preemption representative of the second cluster group is specifically configured to attempt to preempt the arbitration device a preset time later after determining that no fault has occurred in the respective cluster group.

Embodiment 10. The multi-cluster cooperation system according to any one of embodiments 6 to 9, wherein
the multi-cluster cooperation system is active-active data centers, wherein the first cluster group is located in one data center, and the second cluster group is located in the other data center.

In the several embodiments provided by the present application, it should be understood that the disclosed system, apparatus, and method may be implemented in other manners. For example, the described apparatus embodiment is merely an example. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A cluster arbitration method, comprising:
when a fault has occurred in a first cluster group or a second cluster group, determining (102), by the first cluster group, a preemption representative of the first cluster group, wherein if the fault has not occurred in the first cluster group, the preemption representative of the first cluster group attempts (103) to preempt an arbitration device, and if the fault has occurred in the first cluster group, the preemption representative of the first cluster group quits to preempt the arbitration device, and wherein the first cluster group comprises one portion of nodes of a first cluster and one portion of nodes of a second cluster, the second cluster group comprises another portion of nodes of the first cluster and another portion of nodes of the second cluster, and the first cluster and the second cluster cooperate with each other;
if the preemption representative of the first cluster group successfully preempts the arbitration device, continuing, by the first cluster group, service provision.

2. The cluster arbitration method according to claim 1, wherein if the fault has occurred in the second cluster group, the preemption representative of the second cluster group quits to preempt the arbitration device.

3. The cluster arbitration method according to any one of claims 1 to 2, wherein whether the preemption representative of the first cluster group successfully preempts the arbitration device is determined by an arbitration mechanism, and the arbitration mechanism is that a preemption representative that is the first to preempt the arbitration device preempts the arbitration device successfully.

4. The cluster arbitration method according to any one of claims 1 to 3, wherein the cluster arbitration method comprises:
if the fault has occurred in each of the first cluster group and the second cluster group, the first cluster attempts to preempt the arbitration device by using a first preset mechanism, or the second cluster attempts to preempt the arbitration device by using a second preset mechanism.

5. The cluster arbitration method according to any one of claims 1 to 4, wherein the first cluster group is located in one data center, and the second cluster group is located in another data center, and the two data centers are active-active data centers.

6. A first cluster group, comprising:
means for when a fault has occurred in the first cluster group or a second cluster group, determining (102) a preemption representative of the first cluster group, wherein if the fault has not occurred in the first cluster group, the preemption representative of the first cluster group attempts (103) to preempt an arbitration device, and if the fault has occurred in the first cluster group, the preemption representative of the first cluster group quits to preempt the arbitration device, and wherein the first cluster group comprises one portion of nodes of a first cluster and one portion of nodes of a second cluster, the second cluster group comprises another portion of nodes of the first cluster and another portion of nodes of the second cluster, and the first cluster and the second cluster cooperate with each other;
means for if the preemption representative of the first cluster group successfully preempts the arbitration device, continuing service provision.

7. The first cluster group according to claim 6, wherein if the fault has occurred in the second cluster group, the preemption representative of the second cluster group quits to preempt the arbitration device.

8. The first cluster group according to any one of claims 6 to 7, wherein whether the preemption representative of the first cluster group successfully preempts the arbitration device is determined by an arbitration mechanism, and the arbitration mechanism is that a preemption representative that is the first to preempt the arbitration device preempts the arbitration device successfully.

9. The first cluster group according to any one of claims 6 to 8, wherein if the fault has occurred in each of the first cluster group and the second cluster group, the first cluster attempts to preempt the arbitration device by using a first preset mechanism, or the second cluster attempts to preempt the arbitration device by using a second preset mechanism.

10. The first cluster group according to any one of claims 6 to 9, wherein the first cluster group is located in one data center, and the second cluster group is located in another data center, and the two data centers are active-active data centers.

## Patentansprüche

1. Cluster-Arbitrierungsverfahren, umfassend:
wenn ein Fehler in einer ersten Cluster-Gruppe oder einer zweiten Cluster-Gruppe aufgetreten ist, Bestimmen (102), durch die erste Cluster-Gruppe, eines Präemptionsrepräsentanten der ersten Cluster-Gruppe, wobei, wenn der Fehler nicht in der ersten Cluster-Gruppe aufgetreten ist, der Präemptionsrepräsentant der ersten Cluster-Gruppe versucht (103), eine Arbitrierungseinrichtung vorzubelegen, und wenn der Fehler in der ersten Cluster-Gruppe aufgetreten ist, der Präemptionsrepräsentant der ersten Cluster-Gruppe aufhört, die Arbitrierungseinrichtung vorzubelegen, und wobei die erste Cluster-Gruppe einen Teil von Knoten eines ersten Clusters und einen Teil von Knoten eines zweiten Clusters umfasst, die zweite Cluster-Gruppe einen anderen Teil von Knoten des ersten Clusters und einen anderen Teil von Knoten des zweiten Clusters umfasst und der erste Cluster und der zweite Cluster miteinander kooperieren;
wenn der Präemptionsrepräsentant der ersten Cluster-Gruppe die Arbitrierungseinrichtung erfolgreich vorbelegt, Fortfahren, durch die erste Cluster-Gruppe, mit einer Dienstbereitstellung.

2. Cluster-Arbitrierungsverfahren nach Anspruch 1, wobei, wenn der Fehler in der zweiten Cluster-Gruppe aufgetreten ist, der Präemptionsrepräsentant der zweiten Cluster-Gruppe aufhört, die Arbitrierungseinrichtung vorzubelegen.

3. Cluster-Arbitrierungsverfahren nach einem der Ansprüche 1 bis 2, wobei der Umstand, ob der Präemptionsrepräsentant der ersten Cluster-Gruppe die Arbitrierungseinrichtung erfolgreich vorbelegt, durch einen Arbitrierungsmechanismus bestimmt wird, und der Arbitrierungsmechanismus darin besteht, dass ein Präemptionsrepräsentant, der der erste ist, der die Arbitrierungseinrichtung vorbelegt, die Arbitrierungseinrichtung erfolgreich vorbelegt.

4. Cluster-Arbitrierungsverfahren nach einem der Ansprüche 1 bis 3, wobei das Cluster-Arbitrierungsverfahren umfasst:
wenn der Fehler in jeder von der ersten Cluster-Gruppe und der zweiten Cluster-Gruppe aufgetreten ist, dass der erste Cluster versucht, die Arbitrierungseinrichtung durch Verwenden eines ersten voreingestellten Mechanismus vorzubelegen, oder der zweite Cluster versucht, die Arbitrierungseinrichtung durch Verwenden eines zweiten voreingestellten Mechanismus vorzubelegen.

5. Cluster-Arbitrierungsverfahren nach einem der Ansprüche 1 bis 4, wobei sich die erste Cluster-Gruppe in einem Datenzentrum befindet und sich die zweite Cluster-Gruppe in einem anderen Datenzentrum befindet und die beiden Datenzentren aktivaktiv-Datenzentren sind.

6. Erste Cluster-Gruppe, umfassend:
ein Mittel zum, wenn ein Fehler in der ersten Cluster-Gruppe oder einer zweiten Cluster-Gruppe aufgetreten ist, Bestimmen (102) eines Präemptionsrepräsentanten der ersten Cluster-Gruppe, wobei, wenn der Fehler nicht in der ersten Cluster-Gruppe aufgetreten ist, der Präemptionsrepräsentant der ersten Cluster-Gruppe versucht (103), eine Arbitrierungseinrichtung vorzubelegen, und wenn der Fehler in der ersten Cluster-Gruppe aufgetreten ist, der Präemptionsrepräsentant der ersten Cluster-Gruppe aufhört, die Arbitrierungseinrichtung vorzubelegen, und wobei die erste Cluster-Gruppe einen Teil von Knoten eines ersten Clusters und einen Teil von Knoten eines zweiten Clusters umfasst, die zweite Cluster-Gruppe einen anderen Teil von Knoten des ersten Clusters und einen anderen Teil von Knoten des zweiten Clusters umfasst und der erste Cluster und der zweite Cluster miteinander kooperieren;
ein Mittel zum, wenn der Präemptionsrepräsentant der ersten Cluster-Gruppe die Arbitrierungseinrichtung erfolgreich vorbelegt, Fortfahren mit einer Dienstbereitstellung.

7. Erste Cluster-Gruppe nach Anspruch 6, wobei, wenn der Fehler in der zweiten Cluster-Gruppe aufgetreten ist, der Präemptionsrepräsentant der zweiten Cluster-Gruppe aufhört, die Arbitrierungseinrichtung vorzubelegen.

8. Erste Cluster-Gruppe nach einem der Ansprüche 6 bis 7, wobei der Umstand, ob der Präemptionsrepräsentant der ersten Cluster-Gruppe die Arbitrierungseinrichtung erfolgreich vorbelegt, durch einen Arbitrierungsmechanismus bestimmt wird, und der Arbitrierungsmechanismus darin besteht, dass ein Präemptionsrepräsentant, der der erste ist, der die Arbitrierungseinrichtung vorbelegt, die Arbitrierungseinrichtung erfolgreich vorbelegt.

9. Erste Cluster-Gruppe nach einem der Ansprüche 6 bis 8, wobei, wenn der Fehler in jeder von der ersten Cluster-Gruppe und der zweiten Cluster-Gruppe aufgetreten ist, der erste Cluster versucht, die Arbitrierungseinrichtung durch Verwenden eines ersten voreingestellten Mechanismus vorzubelegen, oder der zweite Cluster versucht, die Arbitrierungseinrichtung durch Verwenden eines zweiten voreingestellten Mechanismus vorzubelegen.

10. Erste Cluster-Gruppe nach einem der Ansprüche 6 bis 9, wobei sich die erste Cluster-Gruppe in einem Datenzentrum befindet und sich die zweite Cluster-Gruppe in einem anderen Datenzentrum befindet und die beiden Datenzentren aktiv-aktiv-Datenzentren sind.

## Revendications

1. Procédé d'arbitrage de grappes, consistant à :
quand une anomalie s'est produite dans un premier groupe de grappes ou un second groupe de grappes, déterminer (102), par le premier groupe de grappes, une préemption représentative du premier groupe de grappes, la préemption représentative du premier groupe de grappes essayant (103) de préempter un dispositif d'arbitrage si l'anomalie ne s'est pas produite dans le premier groupe de grappes et la préemption représentative du premier groupe de grappes cessant de préempter le dispositif d'arbitrage si l'anomalie s'est produite dans le premier groupe de grappes, le premier groupe de grappes comprenant une partie de noeuds d'une première grappe et une partie de nœuds d'une seconde grappe et le second groupe de grappes comprenant une autre partie de nœuds de la première grappe et une autre partie de nœuds de la seconde grappe, et la première grappe et la seconde grappe coopérant l'une avec l'autre ;
continuer, par le premier groupe de grappes, une fourniture de service si la préemption représentative du premier groupe de grappes préempte de manière satisfaisante le dispositif d'arbitrage.

2. Procédé d'arbitrage de grappes selon la revendication 1, dans lequel la préemption représentative du second groupe de grappes cesse de préempter le dispositif d'arbitrage si l'anomalie s'est produite dans le second groupe de grappes.

3. Procédé d'arbitrage de grappes selon l'une quelconque des revendications 1 et 2, dans lequel le fait que la préemption représentative du premier groupe de grappes préempte de manière satisfaisante ou non le dispositif d'arbitrage est déterminé par un mécanisme d'arbitrage, et le mécanisme d'arbitrage consiste en ce qu'une préemption représentative qui est la première à préempter le dispositif d'arbitrage préempte le dispositif d'arbitrage de manière satisfaisante.

4. Procédé d'arbitrage de grappes selon l'une quelconque des revendications 1 à 3, dans lequel :
la première grappe essaye de préempter le dispositif d'arbitrage au moyen d'un premier mécanisme prédéfini ou la seconde grappe essaye de préempter le dispositif d'arbitrage au moyen d'un second mécanisme prédéfini si l'anomalie s'est produite dans chacun du premier groupe de grappe et du second groupe de grappes.

5. Procédé d'arbitrage de grappes selon l'une quelconque des revendications 1 à 4, dans lequel le premier groupe de grappes est situé dans un centre de données et le second groupe de grappes est situé dans un autre centre de données, et les deux centres de données sont des centres de données actifs-actifs.

6. Premier groupe de grappes, comprenant :
un moyen permettant, quand une anomalie s'est produite dans le premier groupe de grappes ou un second groupe de grappes, de déterminer (102) une préemption représentative du premier groupe de grappes, la préemption représentative du premier groupe de grappes essayant (103) de préempter un dispositif d'arbitrage si l'anomalie ne s'est pas produite dans le premier groupe de grappes et la préemption représentative du premier groupe de grappes cessant de préempter le dispositif d'arbitrage si l'anomalie s'est produite dans le premier groupe de grappes, le premier groupe de grappes comprenant une partie de nœuds d'une première grappe et une partie de nœuds d'une seconde grappe et le second groupe de grappes comprenant une autre partie de nœuds de la première grappe et une autre partie de nœuds de la seconde grappe, et la première grappe et la seconde grappe coopérant l'une avec l'autre ;
un moyen permettant de continuer une fourniture de service si la préemption représentative du premier groupe de grappes préempte de manière satisfaisante le dispositif d'arbitrage.

7. Premier groupe de grappes selon la revendication 6, dans lequel la préemption représentative du second groupe de grappes cesse de préempter le dispositif d'arbitrage si l'anomalie s'est produite dans le second groupe de grappes.

8. Premier groupe de grappes selon l'une quelconque des revendications 6 et 7, dans lequel le fait que la préemption représentative du premier groupe de grappes préempte de manière satisfaisante ou non le dispositif d'arbitrage est déterminé par un mécanisme d'arbitrage, et le mécanisme d'arbitrage consiste en ce qu'une préemption représentative qui est la première à préempter le dispositif d'arbitrage préempte le dispositif d'arbitrage de manière satisfaisante.

9. Premier groupe de grappes selon l'une quelconque des revendications 6 à 8, dans lequel la première grappe essaye de préempter le dispositif d'arbitrage au moyen d'un premier mécanisme prédéfini ou la seconde grappe essaye de préempter le dispositif d'arbitrage au moyen d'un second mécanisme prédéfini si l'anomalie s'est produite dans chacun du premier groupe de grappe et du second groupe de grappes.

10. Premier groupe de grappes selon l'une quelconque des revendications 6 à 9, le premier groupe de grappes étant situé dans un centre de données et le second groupe de grappes étant situé dans un autre centre de données, et les deux centres de données étant des centres de données actifs-actifs.
